(19) Europäisches Patentamt
European Patent Office
Office européen des brevets

(11) **EP 1 772 301 A2**

(12) **EUROPEAN PATENT APPLICATION**

(43) Date of publication:
**11.04.2007 Bulletin 2007/15**

(51) Int Cl.:
**B60K 6/04** $^{(2006.01)}$

(21) Application number: **06255176.7**

(22) Date of filing: **06.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.10.2005 JP 2005293248**

(71) Applicant: **Nissan Motor Company Limited Kanagawa-ku
Yokohama-shi, Kanagawa 221-0023 (JP)**

(72) Inventor: **Shinichiro, Joe c/o Nissan Motor Co. Ltd.
Yokohama-shi, Kanagawa 221-0023 (JP)**

(74) Representative: **Holmes, Matthew William
Nissan Technical Centre Europe Ltd,
Intellectual Property Department,
Cranfield Technology Park
Bedfordshire, MK43 0DB (GB)**

(54) **Vehicle drive control system**

(57) A hybrid vehicle drive control system selectively switches from an electric traveling (EV) mode in which a first clutch is released and a second clutch is engaged, and a hybrid (HEV) mode in which both clutches are engaged. A slip control of the second clutch is executed when the first clutch is being connected to start the engine during switching from EV mode to HEV mode by controlling a torque transfer capacity of the second clutch to a required drive force, and by simultaneously increasing a motor/generator torque by an amount corresponding to a torque required to start the engine while maintaining a slipping state of the second clutch until connection of the first clutch is completed. Thus, a loss of torque is not felt by the driver and the shock is small when the engine is started during switching from EV mode to HEV mode.

Fig. 1

**Description**

The present invention relates to a vehicle drive control system and particularly, but not exclusively, to a vehicle drive control system for a hybrid vehicle having an electric traveling (EV) mode a hybrid traveling (HEV) mode. Embodiments of the invention relate to a hybrid vehicle drive control system for starting the engine when the vehicle shifts to the HEV mode as a result of output from the engine becoming necessary while the vehicle is traveling in the EV mode. Aspects of the invention also relate to an apparatus, to a method and to a vehicle.

Various configurations have been proposed for hybrid vehicle drive control systems used in such hybrid vehicles. One such hybrid drive system is presented in Japanese Laid-Open Patent Publication No. 11-082260. The hybrid vehicle drive control system presented in Japanese Laid-Open Patent Publication No. 11-082260 has a motor/generator arranged between an engine and a transmission so as to be coupled to a shaft that directs the rotation of the engine to the transmission, a first clutch operatively connecting and disconnecting the engine to and from the motor/generator, and a second clutch operatively connecting and disconnecting the motor/generator to and from the output shaft of the transmission.

A hybrid vehicle equipped with a hybrid vehicle drive control system like that just described can be put into an electric traveling (EV) mode in which the vehicle travels solely by means of power from the motor/generator by disconnecting the first clutch and connecting the second clutch. Such a hybrid vehicle can also be put into a hybrid traveling (HEV) mode in which the vehicle travels using power from both the engine and the motor/generator by connecting both the first clutch and the second clutch.

When the hybrid vehicle is traveling in the EV mode and it becomes necessary to use engine output, the hybrid vehicle switches from the EV mode to the HEV mode. It is necessary to start the engine during such this mode switch.

As described in Japanese Laid-Open Patent Publication No. 11-082260, for example, this switching of modes and starting of the engine are conventionally accomplished by progressively connecting the first clutch so as to establish a connection between the engine and the motor/generator. The torque transmitted by the friction of the first clutch cranks and starts the engine, thereby accomplishing the change from the EV mode to the HEV mode.

However, the engine torque fluctuates when the engine is started and a torque fluctuation also occurs when the first clutch is progressively connected. These torque fluctuations are transmitted to the drive wheels and cause shock to occur. In order to resolve the problems associated with this shock, Japanese Laid-Open Patent Publication No. 11-082260 proposes a technology whereby the second clutch is temporarily released from its connected state between the motor/generator and transmission while the engine is being started by progressively connecting the first clutch.

With the conventional technology described in Japanese Laid-Open Patent Publication No. 11-082260, while the first clutch is being progressively connected between the engine and the motor/generator in order to crank the engine, the second clutch between the motor generator and the transmission is released (disconnected). In other words, while the engine is being cranked, the second clutch severs the connection between the power sources and the drive wheels and thereby prevents torque from being transmitted to the drive wheels. As a result, there is the possibility that the output torque delivered to the drive wheels will drop to zero while the engine is being cranked and the driver will sense an absence of torque that feels odd.

It is an aim of the invention to improve upon such known technology. Other aims and advantages of the invention will become apparent from the description, claims and drawings.

Aspects of the invention therefore provide an apparatus, a method and a vehicle as claimed in the appended claims.

According to another aspect of the invention there is provided a hybrid vehicle drive control system comprising an internal combustion engine, a motor/generator, a first clutch arranged to change a torque transfer capacity between the engine and the motor/generator, a second clutch arranged to change a torque transfer capacity between the motor/generator and at least one drive wheel of a hybrid vehicle and a controller configured to selectively control the first and second clutches to switch between an electric drive mode by releasing the first clutch and engaging the second clutch, and a hybrid drive mode by engaging both the first and second clutches, the controller being configured to execute a slip control of the second clutch when the first clutch is being connected to start the engine during a mode change from the electric drive mode to the hybrid drive mode by controlling the torque transfer capacity of the second clutch to a target drive force required by the hybrid vehicle, and by simultaneously increasing a torque of the motor/generator by an amount corresponding to a torque required to start the engine while maintaining a slipping state of the second clutch until connection of the first clutch is completed.

In an embodiment, the controller is arranged to execute the slip control of the second clutch by executing a first control phase in which the torque transfer capacity of the second clutch is controlled to a value equivalent to the target drive force and a second control phase in which the controlling of the torque transfer capacity of the second clutch to the target drive force, and the simultaneously increasing the torque of the motor/generator to the amount corresponding to the torque required to start the engine while maintaining the slipping state of the second clutch occurs after the first control phase.

In an embodiment, the controller is arranged to control the target drive force, in the first control phase, by adjusting the torque of the motor/generator while the torque transfer capacity of the second clutch is controlled to the value equivalent to the target drive force.

In an embodiment, the controller is arranged to start the engine after entering the second control phase.

In an embodiment, the controller is arranged to control the torque transfer capacity of the second clutch, in the first control phase, to the value equivalent to the target drive force by executing a rotational differential servo control of the second clutch.

In an embodiment, the controller is arranged to decrease a connection hydraulic pressure of the second clutch, in the first control phase, from a hydraulic pressure range in which the second clutch does not slip until the second clutch starts to slip, with the connection hydraulic pressure at which the second clutch starts to slip being set as a hydraulic pressure value equivalent to the target drive force. The controller may be further arranged to execute the slip control such that the first control phase shifts to the second control phase when the second clutch starts to slip.

In an embodiment, the controller is arranged estimate an actual connection hydraulic pressure of the second clutch based on a command value of the connection hydraulic pressure of the second clutch. The controller may be further arranged to use an estimated response of the actual hydraulic pressure with respect to the command value of the connection hydraulic pressure of the second clutch as the connection hydraulic pressure of the second clutch at which the second clutch starts to slip and the first control phase ends.

In an embodiment, the controller is arranged to adjust the connection hydraulic pressure of the second clutch in accordance with an increase or decrease of the target drive force relative to an initial value of the connection hydraulic pressure of the second clutch using a relationship between the target drive force and the connection hydraulic pressure of the second clutch at the point in time when the first control phase ended as a reference.

In an embodiment, the controller is arranged to control the torque transfer capacity of the second clutch, in the first control phase, to a value equivalent to the target drive force by executing a rotation differential servo control of the second clutch when an oil temperature of the second clutch is within a prescribed region, and by executing a connection hydraulic pressure control whereby the connection hydraulic pressure of the second clutch is gradually lowered from a hydraulic pressure range in which the second clutch does not slip when the oil temperature is below said prescribed region.

In an embodiment, the controller is arranged to shorten a duration of time of the first control phase as a depression amount of an accelerator pedal increases.

In an embodiment, the controller is arranged to omit the first control phase when the vehicle shifts to the hybrid drive mode as a result of the accelerator pedal being depressed while the vehicle is traveling in the electric drive mode.

In an embodiment, the controller is arranged set a target slip amount and to control the rotational speed of the motor/generator, in the second control phase, such that a prescribed slipping rotational speed is maintained.

According to a further aspect of the invention there is provided a hybrid vehicle drive control system comprising first power supply means for supplying a first source of power, second power supply means for supplying a second source of power, first power transfer means for selectively changing a torque transfer capacity between the first and second power supply means, second power transfer means for selectively changing a torque transfer capacity between the second power supply means and at least one drive wheel of a hybrid vehicle and control means for selectively controlling the first and second power transfer means to switch between an electric drive mode by releasing the first power transfer means and engaging the second power transfer means, and a hybrid drive mode by engaging both the first and second power transfer means, the control means further including a function of executing a slip control of the second power transfer means when the first power transfer means is being connected to start the first power supply means during a mode change from the electric drive mode to the hybrid drive mode by controlling the torque transfer capacity of the second power transfer means to a target drive force required by the hybrid vehicle, and by simultaneously increasing a torque of the second power supply means by an amount corresponding to a torque required to start the first power supply means while maintaining a slipping state of the second power transfer means until connection of the first power transfer means is completed.

In an embodiment, the control means includes a function of executing the slip control of the second power transfer means by executing a first control phase in which the torque transfer capacity of the second power transfer means is controlled to a value equivalent to the target drive force and a second control phase in which the controlling of the torque transfer capacity of the second power transfer means to the target drive force, and the simultaneously increasing the torque of the second power supply means to the amount corresponding to the torque required to start the first power supply means while maintaining the slipping state of the second power transfer means occurs after the first control phase.

According to a still further aspect of the invention there is provided a hybrid vehicle drive control method comprising supplying a first source of power via an internal combustion engine, supplying a second source of power via a motor/generator, selectively changing a torque transfer capacity between the engine and the motor/generator using a first clutch, selectively changing a torque transfer capacity between the motor/generator and at least one drive wheel of a hybrid vehicle, selectively controlling the first and second clutches to switch between an electric drive mode by releasing the first clutch and engaging the second clutch, and a hybrid drive mode by engaging both the first and second clutches, and executing a slip control of the second clutch when the first clutch is being connected to start the engine during a mode change from the electric drive mode to the hybrid drive mode by controlling the torque transfer capacity of the second clutch to a target drive force required by the hybrid vehicle, and by simultaneously increasing a torque of the motor/generator by an amount corresponding to a torque required to start the engine while maintaining a slipping state of the second clutch until connection of the first clutch is completed.

In an embodiment, the executing of the slip control of the second clutch includes a first control phase in which the torque transfer capacity of the second clutch is controlled to a value equivalent to the target drive force and a second control phase in which the controlling of the torque transfer capacity of the second clutch to the target drive force, and the simultaneously increasing the torque of the motor/generator to the amount corresponding to the torque required to start the engine while maintaining the slipping state of the second clutch occurs after the first control phase.

In embodiments of the invention, by reducing the connection of the second clutch to a slipping connection instead of disconnecting the second clutch completely, the torque fluctuations that occur when the engine is started by progressively connecting the first clutch can be prevented from being transmitted to the drive wheels while also resolving the problem of the output torque delivered to the drive wheels dropping to zero and causing the driver to feel an absence (loss) of torque during engine cranking.

A hybrid vehicle engine start control device according to embodiments of the invention may reliably resolve the aforementioned problem without being affected by variation of the relationship between the actual connection hydraulic pressure of the second clutch and a command value of the connection hydraulic pressure of the second clutch when the second clutch is connected in a slipping state while the engine is being started.

A hybrid vehicle engine start control device in accordance with an embodiment of the present invention is provided with an internal combustion engine, a motor/generator, a first clutch, a second clutch and a controller. The first clutch is arranged to change a torque transfer capacity between the engine and the motor/generator. The second clutch is arranged to change a torque transfer capacity between the motor/generator and at least one drive wheel of a hybrid vehicle. The controller is configured to selectively control the first and second clutches to switch between an electric drive mode by releasing the first clutch and engaging the second clutch, and a hybrid drive mode by engaging both the first and second clutches. The controller is further configured to execute a slip control of the second clutch when the first clutch is being connected to start the engine during a mode change from the electric drive mode to the hybrid drive mode by controlling the torque transfer capacity of the second clutch to a target drive force required by the hybrid vehicle, and by simultaneously increasing a torque of the motor/generator by an amount corresponding to a torque required to start the engine while maintaining a slipping state of the second clutch until connection of the first clutch is completed.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:

Figure 1 is a schematic view of a power train of a hybrid vehicle in which a hybrid vehicle drive control system in accordance with one embodiment of the present invention can be applied;

Figure 2 is a schematic view of a power train of another hybrid vehicle in which another hybrid vehicle drive control system in accordance with another embodiment of the present invention can be applied;

Figure 3 is a schematic view of a power train of another hybrid vehicle in which another hybrid vehicle drive control system in accordance with another embodiment of the present invention can be applied;

Figure 4 is a block diagram of a hybrid vehicle drive control system for the power trains shown in Figures 1 to 3;

Figure 5 is a block diagram showing various control sections of the integrated controller of the hybrid vehicle drive control system shown in Figure 4;

Figure 6 is a flowchart showing a control program executed by the operating point command section of the block diagram shown in Figure 5;

Figure 7 is a characteristic curve diagram of the final target drive force used to find the final target drive force used in the control program shown in the flowchart of Figure 6;

Figure 8 is a plot illustrating the electric traveling (EV) mode region and hybrid traveling (HEV) mode region of the hybrid vehicle;

Figure 9 is a characteristic curve diagram plotting the target charge/discharge quantity versus the state of charge of the battery of the hybrid vehicle;

Figure 10 is a gear change curve diagram for the automatic transmission installed in the hybrid vehicle;

Figure 11 is a characteristic curve diagram illustrating an example of a map for finding the maximum allowable torque of the engine installed in the hybrid vehicle;

Figure 12 shows a mode transition map illustrating the mode changes that occur when the hybrid vehicle changes from the electric traveling (EV) mode to the hybrid traveling (HEV) mode;

Figure 13 is an operation time chart illustrating the operational effects of the control program shown in Figure 6 in a case in which the hybrid vehicle switches from the electric traveling (EV) mode to the hybrid traveling (HEV) mode as a result of the driver operating the accelerator pedal; and

Figure 14 is an operation time chart illustrating the operational effects of the control program shown in Figure 6 in a case in which the hybrid vehicle switches from the electric traveling (EV) mode to the hybrid traveling (HEV) mode as a result of a change in vehicle speed or a change in the state of charge of the battery.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

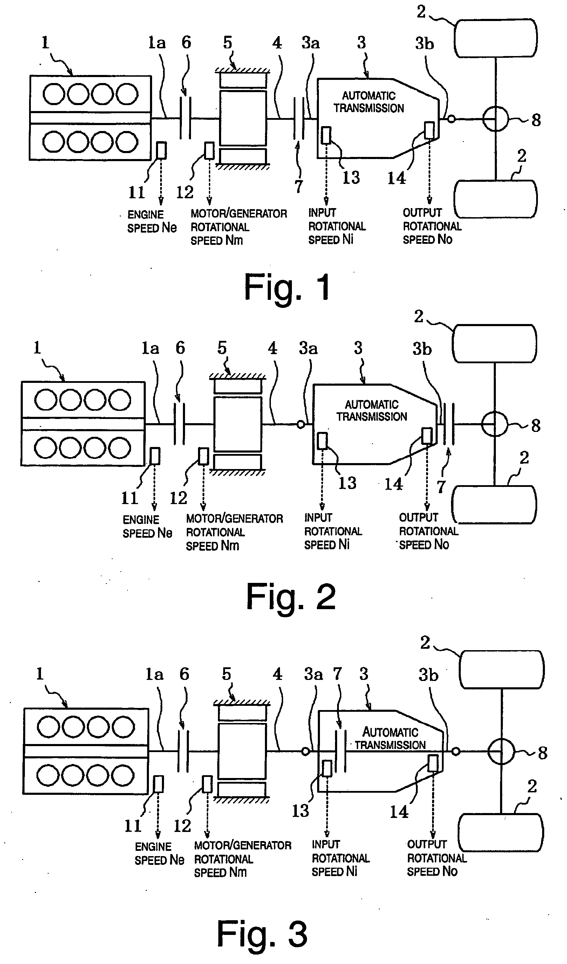

Referring initially to Figure 1, a front engine/rear wheel drive vehicle (rear wheel drive hybrid vehicle) is illustrated that is equipped with a hybrid vehicle drive control system in accordance with one preferred embodiment of the present invention. Basically, the hybrid vehicle includes, among other things, an internal combustion engine 1 with a crankshaft 1a, a pair of rear drive wheels 2, an automatic transmission 3 with an input shaft 3a, a power transfer shaft 4, a motor/ generator 5, a first clutch 6 and a second clutch 7. In the power train of the hybrid vehicle shown in Figure 1, the automatic transmission 3 is arranged rearward of and in direct alignment with the engine 1 in the same manner as in a regular rear wheel drive automobile. The motor/generator 5 is operatively arranged on the shaft 4 that serves to transfer the rotation of the crankshaft 1a of the engine 1 to the input shaft 3a of the automatic transmission 3.

The motor/generator 5 is a device configured such that it can be used as a motor or an electric generator. The motor/generator 5 is operatively arranged between the engine 1 and the automatic transmission 3. The first clutch 6 is operatively arranged between the motor/generator 5 and the engine 1, i.e., more specifically, between the shaft 4 and the engine crankshaft 1a. The first clutch 6 serves to make it possible to disconnect the connection between the engine 1 and the motor/generator 5. The first clutch 6 is configured such that the torque transfer capacity (torque capacity) thereof can be changed in either a continuous fashion or a stepwise fashion. For example, the first clutch 6 can be a multi-plate wet clutch configured such that its torque transfer capacity can be changed by controlling the flow rate of a hydraulic clutch fluid (hydraulic oil) and the pressure of the hydraulic clutch fluid (clutch connection hydraulic pressure) either continuously or in a stepwise fashion by a proportional solenoid.

The second clutch 7 is provided between the motor/generator 5 and the automatic transmission 3, i.e., more specifically, between the shaft 4 and the transmission input shaft 3a. The second clutch 7 serves to make it possible to sever the connection between the motor/generator 5 and the automatic transmission 3. Similarly to the first clutch 6, the second clutch 7 is configured such that the torque transfer capacity thereof can be changed in either a continuous fashion or a stepwise fashion. For example, the second clutch 7 can be a multi-plate wet clutch configured such that its torque transfer capacity can be changed by controlling the flow rate of a hydraulic clutch fluid (hydraulic oil) and the pressure of the hydraulic clutch fluid (clutch connection hydraulic pressure) either continuously or in a stepwise fashion by a proportional solenoid.

In this embodiment, the automatic transmission 3 is assumed to be the same as the automatic transmission presented in pages C-9 to C22 of the "Nissan Skyline New Model (CV35) Handbook" published by Nissan Motor Company, Ltd. The automatic transmission 3 is thus configured such that a plurality of friction elements (clutches and brakes) can be selectively engaged and disengaged and the power transmission path (e.g., first gear, second gear, etc.) is determined based on the combination of the engaged and disengaged friction elements. The automatic transmission 3 transfers the rotation of the input shaft 3a to an output shaft 3b after converting the rotation at a gear ratio corresponding to the selected gear. The rotation of the output shaft 3b is distributed to the left and right rear wheels 2 by a differential gear unit 8 and thereby contributes to moving the vehicle. The automatic transmission 3 is not limited to a step-type automatic transmission like that just described; it is also acceptable to use a continuously variable transmission (CTV).

When the vehicle is traveling under low load/low speed conditions, such as when the vehicle is starting to move from a stopped state, the vehicle requests an electric traveling (EV) mode and the power train shown in Figure 1 is controlled such that the first clutch 6 is released, the second clutch 7 is connected, and the automatic transmission 3 is in a power transmitting state. When the motor/generator 5 is driven under these conditions, the output rotation of the motor/generator 5 alone is transferred to the transmission input shaft 3a and the transmission 3 transfers the rotation of the input shaft 3a to the transmission output shaft 3b at a gear ratio corresponding to the selected gear. The rotation of the transmission output shaft 3b is then transmitted to the rear wheels 2 through the differential gear unit 8 and the vehicle moves in an electric traveling (EV) mode (also termed herein as electric drive mode) using output from the motor/generator 5 only.

When the vehicle is traveling at a high speed and/or under a large load, it requests a hybrid traveling (HEV) mode (also termed herein as hybrid drive mode) and the power train is controlled such that the first clutch 6 and the second clutch 7 are both connected and the automatic transmission 3 is in a power transmitting state. In this state, the output rotations from both the engine 1 and the motor/generator 5 or the output rotation from the engine 1 is transferred to the transmission input shaft 3a and the transmission 3 transfers the rotation of the input shaft 3a to the transmission output shaft 3b at a gear ratio corresponding to the selected gear. The rotation of the transmission output shaft 3b is then transmitted to the rear wheels 2 through the differential gear unit 8 and the vehicle moves in the hybrid traveling (HEV) mode using output from both the engine 1 and the motor/generator 5 or only the engine 1.

When the vehicle is traveling in the HEV mode and the engine 1 is running at optimum fuel efficiency such that a surplus of energy is produced, the surplus energy is used to operate the motor/generator 5 as an electric generator and, thereby, convert the surplus energy into electric energy. The generated electric energy then can be stored and used to drive the motor/generator 5 as a motor, thereby improving the fuel efficiency of the engine 1.

Although in Figure 1 the second clutch 7 (which makes it possible to connect and disconnect the motor/generator 5 to and from the drive wheels 2) is disposed between the motor/generator 5 and the automatic transmission 3, the same function can be achieved by disposing the second clutch 7 between the automatic transmission 3 and the differential gear unit 8 as shown in Figure 2.

Also, instead of providing the second clutch 7 as a dedicated clutch in front of or in back of the automatic transmission 3 as illustrated in Figures 1 and 2, it is acceptable to use an existing friction element that is provided inside the automatic transmission 3 for selecting a forward gear or a reverse gear, as shown in Figure 3. In the latter case (Figure 3), when the friction element that constitutes the second clutch 7 is engaged so as to execute the mode selection function, the same friction element also function to put the automatic transmission into a power transmitting state. Since a dedicated second clutch is not required, this arrangement is highly advantageous from the standpoint of cost.

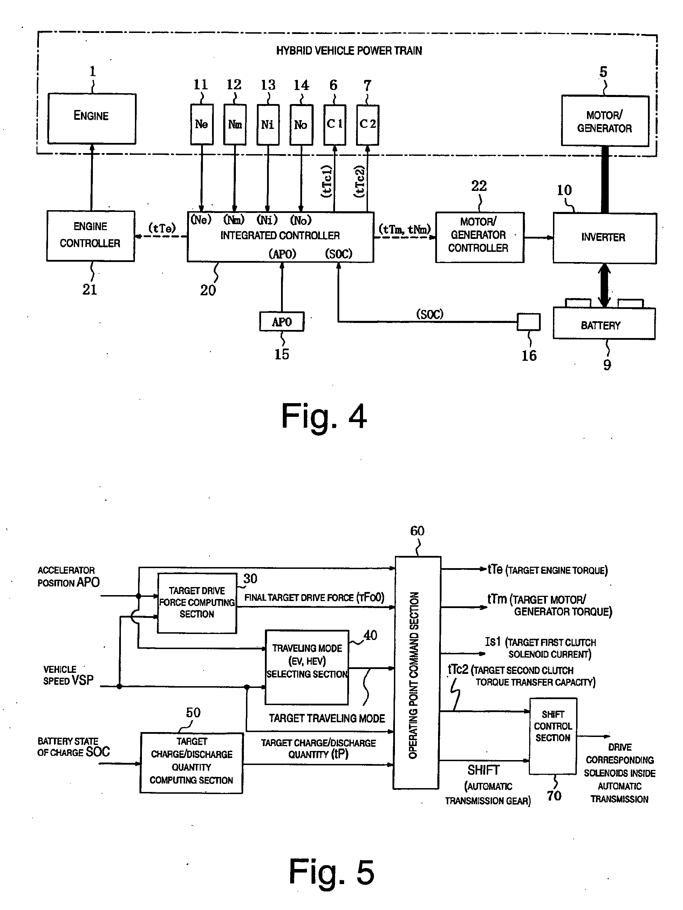

Figure 4 shows a control system for controlling the hybrid vehicle power train basically comprises the engine 1, the motor/generator 5, the first clutch 6, and the second clutch 7 as shown in any one of Figures 1 to 3.

In the explanations that follow, it will be assumed that the power train shown in Figure 1 is used. However, it will be apparent that this control can be easily adapted to the other power trains shown in Figures 2 and 3.

The control system shown in Figure 4 has an integrated controller 20 that serves to execute integrated control of the operating point of the power train. The integrated controller 20 is configured to specify the operating point of the power train in terms of a target engine torque tTe, a target motor/generator torque tTm (a target motor/generator rotational speed tNm is also acceptable), a target torque transfer capacity tTc1 of the first clutch 6, and a target torque transfer capacity tTc2 of the second clutch 7.

Generally speaking, as explained below in more detail, the present invention is configured execute a slip control of the second clutch 7 when the first clutch 6 is progressively connected so as to start the engine 1 during a mode change of the hybrid vehicle from the electric drive mode to the hybrid drive mode. The slip control of the second clutch 7 is also executed during the hybrid traveling mode when the engine 1 is restarted by resuming the fuel supply after having been in a fuel cut state in which the fuel supply to the engine 1 was stopped.

The slip control of the second clutch 7 preferably includes a first control phase in which the target drive force required by the vehicle is controlled by controlling the torque of the motor/generator and the torque transfer capacity of the second clutch is controlled to a value equivalent to the target drive force. The slip control also includes a second control phase, occurring after the first control phase, in which the target drive force of the vehicle is controlled by controlling the torque transfer capacity of the second clutch and a slipping state of the second clutch is maintained by controlling the motor generator.

With a hybrid vehicle engine start control device in accordance with the present invention, the slip control of the second clutch 7 is executed when the engine 1 is started in connection with the vehicle switching from the electric traveling mode to the hybrid traveling mode and when the engine 1 is restarted by resuming the supply of fuel after having been in a fuel cut state while the vehicle is traveling in the hybrid traveling mode. The slip control of the second clutch 7 enables the target drive force to be delivered to the wheels 2 in a continuous fashion while also preventing the torque fluctuation associated with starting the engine 1 from being transmitted to the drive wheels 2. As a result, shock resulting from the torque fluctuation associated with starting the engine 1 can be avoided and the driver can be prevented from experiencing the odd feeling of an absence of driving force.

Additionally, since the slip control of the second clutch 7 is contrived to have a first control phase in which the target drive force is controlled by controlling the torque of the motor/generator 5 and the torque transfer capacity of the second clutch 7 is controlled to a value equivalent to the target drive force and a second control phase in which the target drive force of the vehicle is controlled by controlling the torque transfer capacity of the second clutch 7 while the slipping state of the second clutch is maintained by controlling the motor/generator 5, the target drive force of the vehicle is not affected by variation of the relationship between the actual connection hydraulic pressure of the second clutch 7 and a command value of the connection hydraulic pressure of the second clutch 7. As a result, the actual drive force does not drop and a sudden change in torque does not occur when the second clutch 7 starts slipping. Thus, the engine 1 can be started with little shock and the previously described operational effects can be obtained in a more reliable manner.

The integrated controller 20 preferably includes a microcomputer with a hybrid power transmitting control program that controls the operations of the engine 1, the motor/generator 5, and the first and second clutches. In other words, the microcomputer of the integrated controller 20 is programmed to control the operations of the engine 1, the motor/generator 5, and the first and second clutches 6 as discussed below. The integrated controller 20 also include other conventional components such as an input interface circuit, an output interface circuit, and storage devices such as a ROM (Read Only Memory) device and a RAM (Random Access Memory) device. It will be apparent to those skilled in the art from this disclosure that the precise structure and algorithms for the integrated controller 20 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The integrated controller 20 operatively connected to the following sensors: an engine speed sensor 11, a motor/generator speed sensor 12, a transmission input rotational speed sensor 13, a transmission output rotational speed sensor 14, an accelerator pedal position sensor 15 and a state of charge sensor 16. The engine speed sensor 11, the motor/generator speed sensor 12, the input rotational speed sensor 13, and the output rotational speed sensor 14 are arranged as shown in Figures 1 to 3. The engine speed sensor 11 is configured and arranged to detect an engine speed Ne of the engine 1 and produce a signal indicative of the detected engine speed Ne that is inputted to the integrated controller 20. The motor/generator speed sensor 12 is configured and arranged to detect a rotational speed Nm of the motor/generator 5 and produce a signal indicative of the detected rotational speed Nm that is inputted to the integrated controller 20. The transmission input rotational speed sensor 13 is configured and arranged to detect a rotational speed Ni of the input shaft 3a of the automatic transmission 3 and produce a signal indicative of the detected rotational speed Ni that is inputted to the integrated controller 20. The transmission output rotational speed sensor 14 is configured and arranged to detect a rotational speed No of the output shaft 3b of the automatic transmission 3 and produce a signal indicative of the detected rotational speed No that is inputted to the integrated controller 20. The accelerator pedal position sensor 15 is configured and arranged to detect an accelerator pedal depression amount (accelerator position APO) and produce a signal indicative of the detected accelerator pedal depression amount (accelerator position APO) that is inputted to the integrated controller 20. The state of charge sensor 16 is configured and arranged to detect a state of charge SOC (usable electric power) of a battery 9 in which electric power for the motor/generator 5 is stored and produce a signal indicative of the detected state of charge SOC that is inputted to the integrated controller 20. Thus, the integrated controller 20 receives these input signals for determining the operating point of the power train.

The integrated controller 20 selects an operating (traveling) mode (EV mode or HEV mode) that is capable of delivering the drive force desired by the driver based on the accelerator position APO, the battery state of charge SOC, and the transmission output rotational speed No (vehicle speed VSP) and computes the target engine torque tTe, the target motor/generator torque tTm (target motor/generator rotational speed tNm also acceptable), the target first clutch torque transfer capacity tTc1, and the target second clutch torque transfer capacity tTc2. The target engine torque tTe is fed to an engine controller 21 and the target motor/generator torque tTm (or the target motor/generator rotational speed tNm) is fed to a motor/generator controller 22.

The engine controller 21 controls the engine 1 such that the engine torque Te becomes equal to the target engine torque tTe, and the motor/generator controller 22 controls the motor/generator 5 through the battery 9 and an inverter 10 such that the torque Tm (or the rotational speed Nm) of the motor/generator 5 becomes equal to the target motor/generator torque tTm (or the target motor/generator rotational speed tNm).

The integrated controller 20 supplies a solenoid current corresponding to the target first clutch torque transfer capacity tTc1 to a connection control solenoid (not shown) of the first clutch 6 and a solenoid current corresponding to the target second clutch torque transfer capacity tTc2 to a connection control solenoid (not shown) of the second clutch 7. In this way, the connection force (holding force) of the first clutch 6 is controlled such that the torque transfer capacity Tc1 of the first clutch 6 becomes equal to the target torque transfer capacity tTc1 and the connection force of the second clutch 7 is controlled such that the torque transfer capacity Tc2 of the second clutch 7 becomes equal to the target torque transfer capacity tTc2.

Figure 5 is a block diagram showing the different functions (sections) that enable the integrated controller 20 to select the traveling mode (EV mode or HEV mode) and compute the target engine torque tTe, the target motor/generator torque tTm (or the target motor/generator rotational speed tNm), the target first clutch torque transfer capacity tTc1, and the target second clutch torque transfer capacity tTc2.

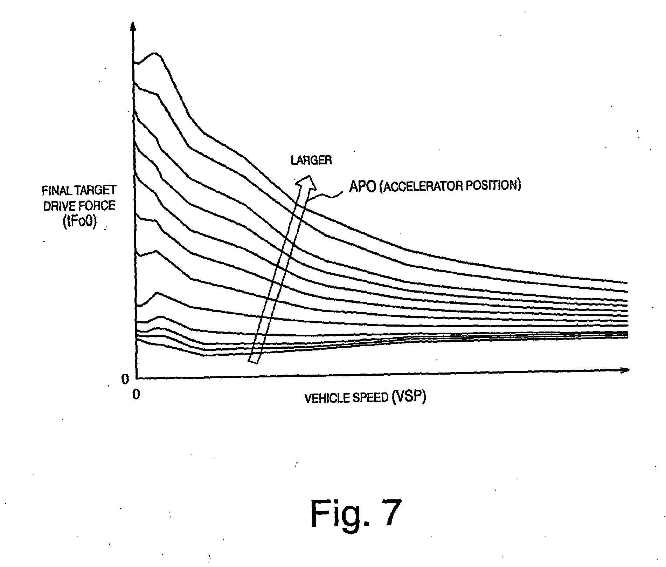

The target drive force computing section 30 uses a target drive force map such as the one shown in Figure 7 to compute a final (or steady) target drive force tFo0 based on the accelerator position APO and the vehicle speed VSP.

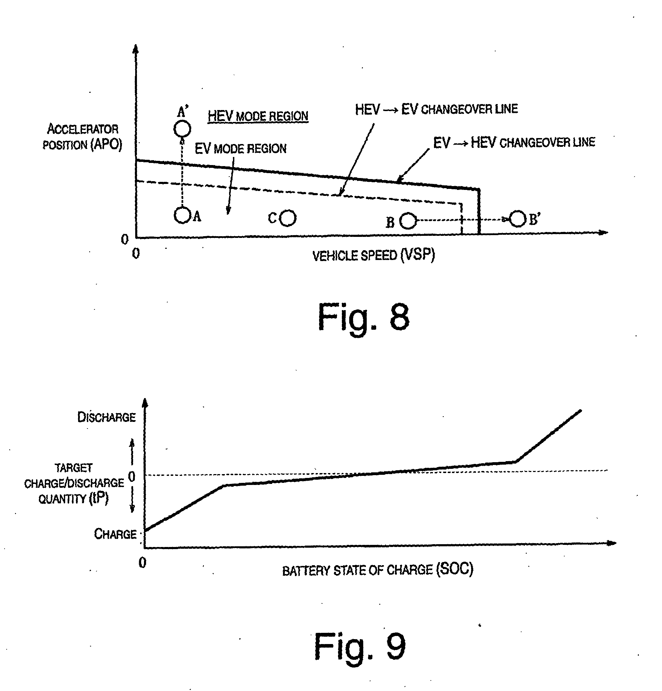

The traveling mode selecting section 40 uses the EV-HEV region map shown in Figure 8 to determine the traveling mode to be targeted based on the accelerator position APO and the vehicle speed VSP. As is clear from the EV-HEV region map shown in Figure 8, the HEV mode is selected when the vehicle is traveling in a high load/high vehicle speed region, while the EV mode is selected when the vehicle is in a low load/low vehicle speed region. If the vehicle is traveling in the EV mode and the operating point defined by the accelerator position APO and vehicle speed VSP crosses the EV-to-HEV changeover line so as to enter the HEV region, then the traveling mode changes from the EV mode to the HEV mode. Conversely, if the vehicle is traveling in the HEV mode and the operating point crosses the HEV-to-EV changeover line so as to enter the EV region, then the traveling mode changes from the HEV mode to the EV mode.

The target charge/discharge quantity computing section 50 shown in Figure 5 uses the battery charge/discharge quantity map shown in Figure 9 to compute a target charge/discharge quantity (electric power) tP based on the battery state of charge SOC.

The operating point command section 60 determines a final target operating point based on the accelerator position APO, the final target drive force tFo0, the target traveling mode, the vehicle speed VSP, and the target charge/discharge power tP. The operating point command section 60 then calculates the target engine torque tTe, the target motor/generator torque tTm, the target solenoid current Is1 for the first clutch 6, the target torque transfer capacity tTc2 of the second clutch 7, and the target gear SHIFT, which are transient values that vary from moment to moment.

The shift control section 70 receives the target second clutch torque transfer capacity tTc2 and the target gear SHIFT and drives the corresponding solenoid valves inside the automatic transmission 3 so as to achieve the target second clutch torque transfer capacity tTc2 and the target gear SHIFT.

In the case of the automatic transmission 3 shown in Figure 3, this solenoid valve control simultaneously controls the connection force of the second clutch 7 such that the target second clutch torque transfer capacity tTc2 is reached and puts the automatic transmission 3 into such a state that it transmits power at the target gear SHIFT.

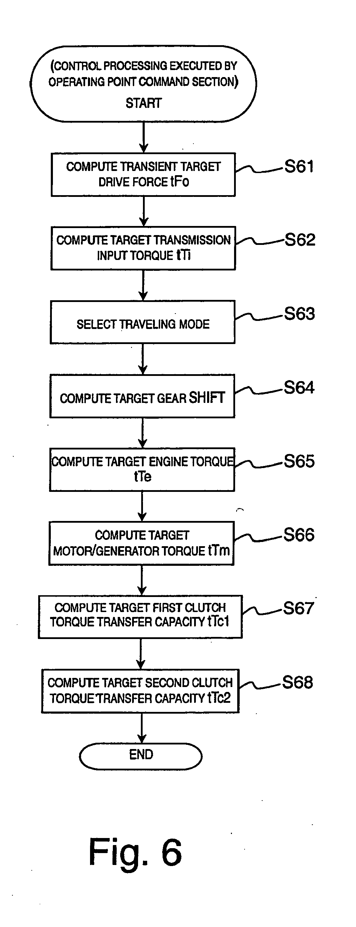

The operating point command section 60 executes the command program shown in Figure 6 to compute the transient target engine torque tTe, the target motor/generator torque tTm, the first clutch target solenoid current Is1, the target second clutch torque transfer capacity tTc2, and the target gear SHIFT.

In step S61, the operating point command section 60 computes a transient target drive force tFo required to move from the current drive force to the final target drive force tFo0 with a prescribed response characteristic. For example, the transient target drive force tFo can be computed by passing the final target drive force tFo0 through a low pass filter having a prescribed time constant.

In step S62, using the equation (1) shown below, the operating point command section 60 calculates a target input torque tTi of the automatic transmission 3 that will be required in order to attain the transient target drive force tFo.

$$tTi = tFo \times Rt/if/iG \quad (1)$$

In the equation, the term Rt is the effective radius of the tires of the drive wheels 2, if is the final gear ratio, and the term iG is the gear ratio of the automatic transmission 3 as determined by the currently selected gear.

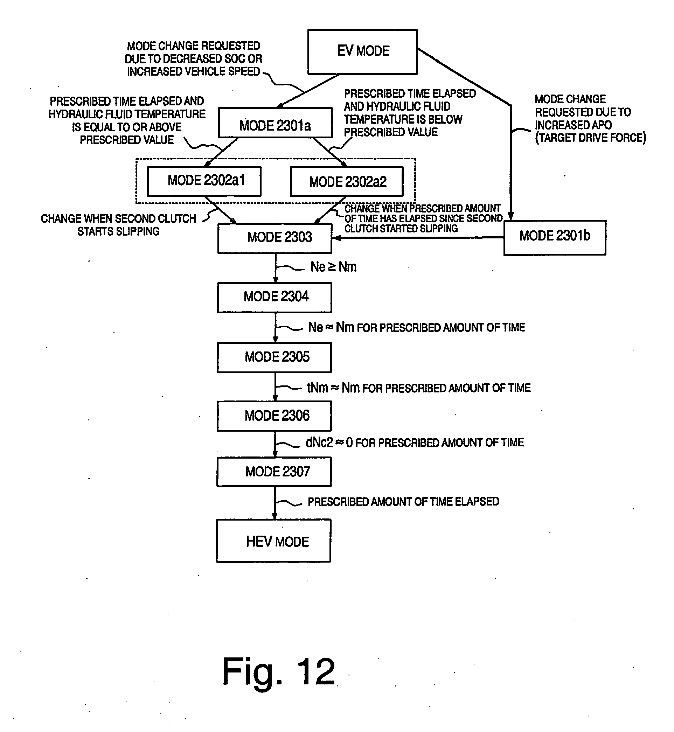

In step S63, the operating point command section 60 selects the traveling mode in accordance with the target traveling mode determined by the traveling mode selecting section 40 shown in Figure 5. Under normal circumstances, the EV mode is selected if the target traveling mode is the EV mode and the HEV mode is selected if the target traveling mode is the HEV mode. If the target traveling mode changes to the EV mode while the vehicle is traveling in the HEV mode, the integrated controller 20 changes the traveling mode from the HEV mode to the EV mode. Meanwhile, if the target traveling mode changes to the HEV mode while the vehicle is traveling in the EV mode, the integrated controller 20 changes the mode as shown in the mode transition diagram shown in Figure 12 so as to change the traveling mode from the EV mode to the HEV mode in a manner that involves starting the engine 1 in accordance with the present invention.

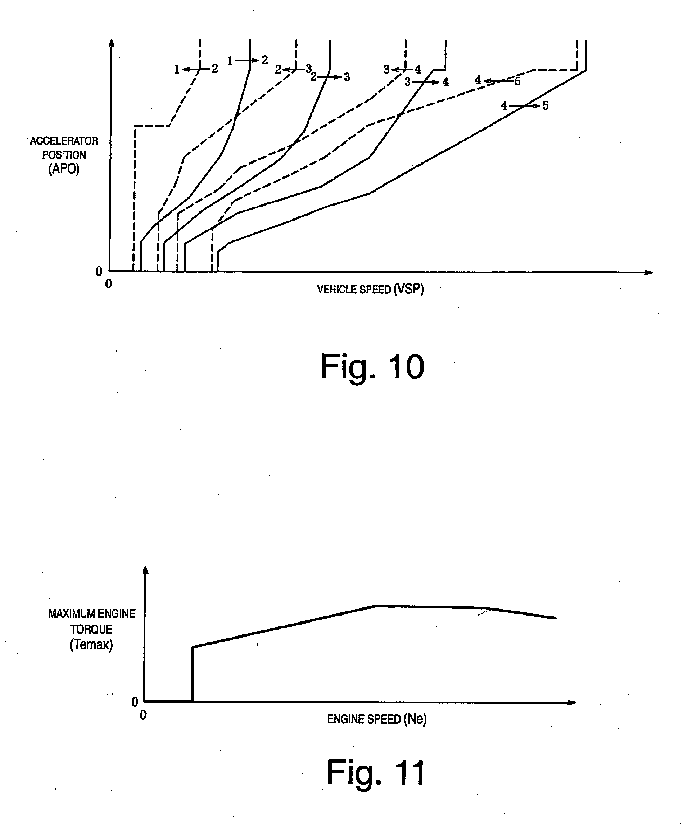

In step S64, the operating point command section 60 uses a scheduled gear shift map like the example shown in Figure 10 to determine the target gear SHIFT based on the accelerator position APO and the vehicle speed VSP. Then, the operating point command section 60 issues a command to the shift control section 70 shown in Figure 5 instructing it to shift to the target gear SHIFT. The shift control section 70 then instructs the automatic transmission 3 to shift to the target gear SHIFT. In Figure 10, the solid lines are upshift lines indicating the upshift boundary between adjacent gears and the broken lines are downshift lines indicating the downshift boundary between adjacent gears. If a request for shifting gears in a manner that skips one or more adjacent gears occurs while the power train is being changed from the EV mode to the HEV mode, the gear shift request will not be executed until the mode change is completed. After the mode change is finished, the gear position of the transmission is shifted in a manner that takes into account the fact that the power train is in the HEV mode.

The method of calculating the target engine torque tTe in step S65 will now be explained. If the power train is in the HEV mode, first, an ideal engine torque tTe0 is calculated using the equation (2) shown below with the target input torque tTi found in step S62, the input rotational speed Ni of the automatic transmission 3, and the engine speed Ne.

$$tTe0 = (tTi \times Ni - tP)/Ne \quad (2)$$

Then, a maximum engine torque Temax is found based on the engine speed Ne using a maximum engine torque map like the example shown in Figure 11. The ideal engine torque tTe0 is set as the target engine torque tTe so long as it does not exceed the maximum engine torque Temax. If the ideal engine torque tTe0 exceeds the maximum engine torque Temax, the maximum engine torque Temax is set as the target engine torque tTe.

If the power train is in the EV mode, then engine torque is not necessary and the target engine torque tTe is set to zero. If the traveling mode is in the midst of changing, the target engine torque tTe is determined in accordance with operations described later that are for situations in which the traveling mode is in the process of being changed.

The target engine torque tTe is sent to the engine controller 21 as shown in Figure 4, and then the engine controller 21 controls the engine 1 such that the target engine torque tTe is attained.

In step S66, using the equation (3) shown below, if the power train is in the EV mode or the HEV mode, the operating point command section 60 calculates the target motor/generator torque tTm that is necessary in order to generate the target transmission input torque tTi in conjunction with the target engine torque tTe.

$$tTm = tTi - tTe \quad (3)$$

If the traveling mode is in the midst of changing, the target motor/generator torque tTm is determined in accordance with operations described later that are for situations in which the traveling mode is in the process of being changed.

The target motor/generator torque tTm is sent to the motor/generator controller 22 shown in Figure 4 and the motor/generator controller 22 controls the motor/generator 5 through the inverter 10 such that the target motor/generator torque tTm is attained.

In step S67, the operating point command section 60 determines the target torque transfer capacity tTc1 of the first clutch 6.

If the power train is in the EV mode, the operating point command section 60 sets the target torque transfer capacity tTc1 of the first clutch 6 to zero because the first clutch 6 is released. If the power train is in the HEV mode, the operating point command section 60 sets the target torque transfer capacity tTc1 of the first clutch 6 to a maximum value. If the traveling mode is in the midst of changing, the target first clutch torque transfer capacity tTc1 is determined in accordance with operations described later that are for situations in which the traveling mode is in the process of being changed.

The target first clutch torque transfer capacity tTc1 is converted into a target first clutch solenoid current Is1 as shown in Figure 5, and the first clutch solenoid current Is1 is used in a connection control of the first clutch 6 as shown in Figure 4 so as to connect the first clutch 6 in such a manner that the target first clutch torque transfer capacity tTc1 is attained.

In step S68, the operating point command section 60 determines the target torque transfer capacity tTc2 of the second clutch 7. If the power train is in the EV mode, the operating point command section 60 sets the target second clutch torque transfer capacity tTc2 to a value evTmax equivalent to the maximum drive force of EV mode (EV second clutch maximum torque transfer capacity). If the power train is in HEV mode, the operating point command section 60 sets the target second clutch torque transfer capacity tTc2 to a maximum value. If the traveling mode is in the midst of changing, the target second clutch torque transfer capacity tTc2 is determined in accordance with operations described later that are for situations in which the traveling mode is in the process of being changed.

The target second clutch torque transfer capacity tTc2 is used by the shift control section 70 shown in Figure 5 to execute a connection control the second clutch 7 such that the second clutch 7 is closed in such a manner that the target second clutch torque transfer capacity tTc2 is attained. More specifically, the target second clutch torque transfer capacity tTc2 and the target gear SHIFT are sent to the shift control section 70 and used to control the automatic transmission 3 to the target gear SHIFT.

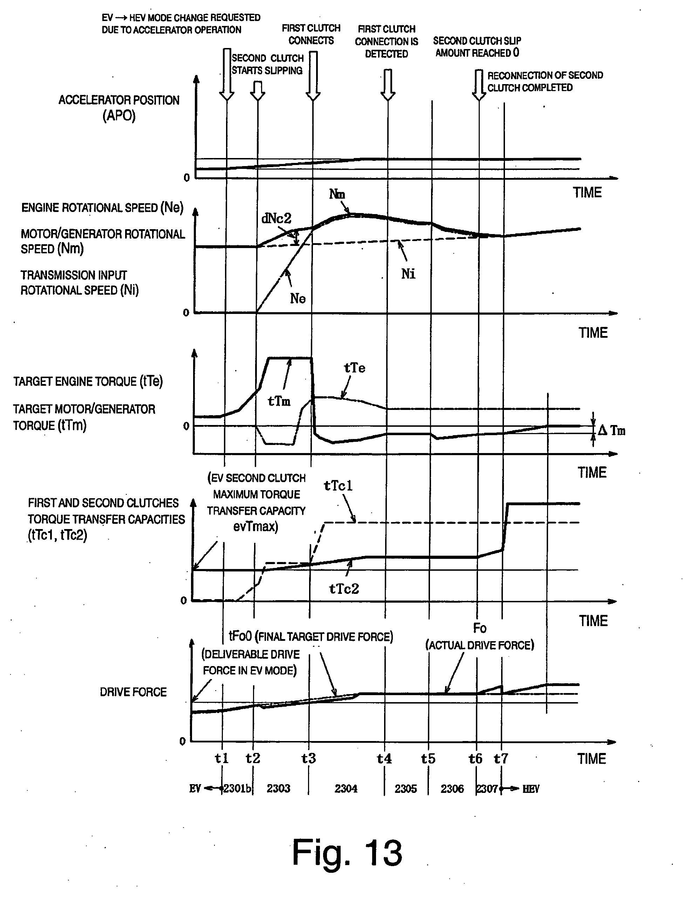

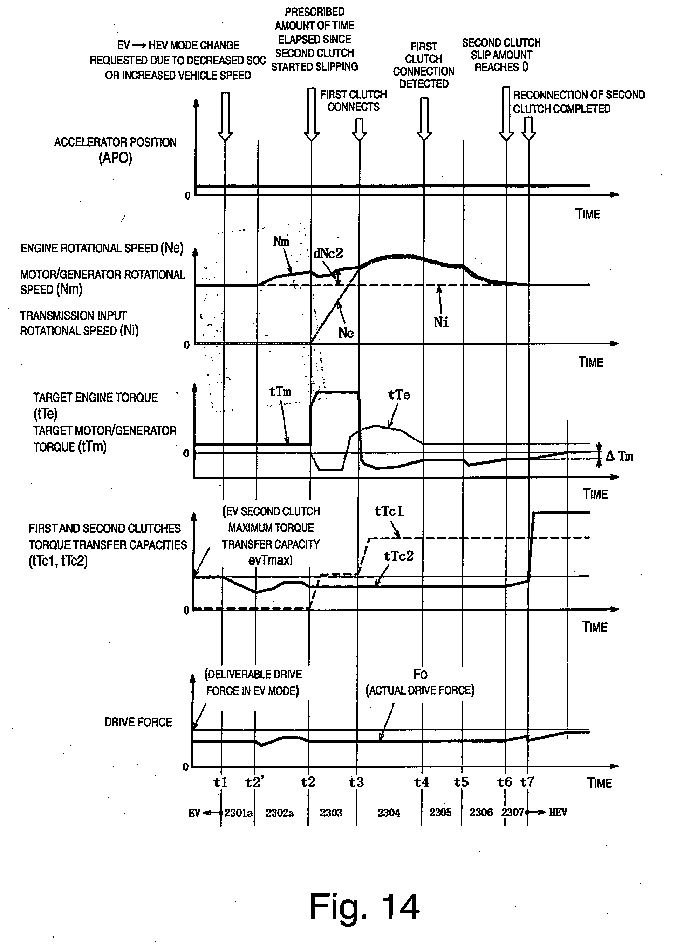

The mode change control used to change from the EV mode to the HEV mode and start the engine 1 in a manner according to the present invention will now be explained in more detail with reference to the mode transition diagram shown in Figure 12 and the time charts shown in Figures 13 and 14.

Basically, at a time t1 (Figures 13 and 14) when a request occurs for the hybrid vehicle to change from the EV mode to the HEV mode due to depression of the accelerator pedal, controls commences in accordance with a mode 2301b. During the mode 2301b, the torque transfer capacity tTc1 of the first clutch 6 for HEV mode is increased to a value for controlling the drive force and the sliding torque of the first clutch 6 causes engine cranking to begin before the second clutch 7 for the EV and HEV modes starts to slip. Additionally, during the mode 2301b, the torque transfer capacity tTc2 of the second clutch 7 is held at a value equivalent to the maximum drive force evTmax of EV mode. At a time t2 when the second clutch starts to slip, the hybrid vehicle proceeds to a mode 2303. During the mode 2303, the torque transfer capacity tTc2 is set such that the second clutch 7 slides while the engine is started with the sliding torque of the first clutch 6 and the torque transfer capacity tTc1 of the first clutch 6 is set such that the drive force increases and the second clutch 7 slips in a stable manner. Additionally, during the mode 2303, control is executed such that the engine 1 is started and the torque of a motor/generator 5 is set such that the second clutch 7 achieves a slipping state as explained below.

More specifically, if the vehicle is traveling in the EV mode and the driver increases the accelerator position APO (increases the target drive force) as shown in Figure 13 such that the operating point changes from, for example, the point A to the point A' as shown in Figure 8, then the operating point will have moved from the EV mode region to the HEV mode region, and the integrated controller 20 will detect the need to change from the EV mode to the HEV mode. As shown in Figures 12 and 13, the integrated controller 20 starts the mode change by moving from the EV mode to the mode 2301b and then passing through the modes 2303 to 2307 before reaching the HEV mode. The mode 2301b and the modes 2303 to 2307 will be described in detail later.

Meanwhile, if the vehicle is traveling in the EV mode and, even though the accelerator position APO remains constant as shown in Figure 14, the vehicle speed VSP increases such that the operating point changes from, for example, the point B to the point B' as shown in Figure 8, then the operating point will have moved from the EV mode region to the HEV mode region and the integrated controller 20 will detect the need to change from the EV mode to the HEV mode. Similarly, if the operating point remains constant at, for example, the point C as shown in Figure 8, but the battery state of charge SOC decreases such that the target mode changes to the HEV mode, the integrated controller 20 will detect the need to change from the EV mode to the HEV mode. In either of these two cases, as shown in Figures 12 and 14, the integrated controller 20 starts the mode change by moving from the EV mode to the mode 2301a and then passing through the modes 2302a (2302a1 or 2302a2) and 2303 to 2307 before reaching the HEV mode. The modes 2301a and the mode 2302a (modes 2302a1 and 2302a2) will be explained in detail later.

START OF THE CHANGE FROM THE EV MODE TO THE HEV MODE

A case in which the accelerator position (target drive force) increases and the mode change from the EV mode to the HEV mode starts by passing through the mode 2301b will now be explained with reference to Figures 12 and 13. Since this mode change is initiated by a request to change from the EV mode to the HEV mode (request to start the engine) due to the accelerator pedal being depressed, it is more desirable to execute the mode change (start the engine) with a high response speed and increase the drive force quickly than to execute the mode change (start the engine) smoothly. Additionally, since the drive force is in the process of changing to the operation of the accelerator pedal, a certain amount of drive force shock caused by the mode change (starting of the engine) will not be readily perceived by the driver.

Therefore, the mode change control for a case in which the mode change starts by passing through the mode 2301b, i.e., the mode change control executed when there is a request to change from the EV mode to the HEV mode due to depression of the accelerator pedal, is contrived such that the mode moves to the mode 2301b and the mode change starts at the moment t1 (see Figure 13) when the request occurs. In the mode 2301b, a drive force within a range that can be distributed by the second clutch 7 is generated in the EV mode and the second clutch 7 is controlled to slip as soon as possible when the drive force exceeds the range that can be distributed by the second clutch 7. In order to accomplish this control, the individual components of the power train are controlled as described below.

Since the engine 1 needs to be started quickly as described previously, the target first clutch torque transfer capacity tTc1 is increased as shown in Figure 13 such that the engine 1 starts cranking (engine speed Ne $\geq$ 0) due to

sliding torque of the first clutch 6 before the second clutch 7 starts to slip. However, if the sliding torque of the first clutch 6 is too large, the drive force will decline and the driver will detect a feeling of deceleration. In order to prevent such a decline in the drive force, the target first clutch torque transfer capacity tTc1 is controlled to a value within the range indicated by the equation (4) shown below, i.e., a value smaller than the largest first clutch torque transfer capacity that will allow the target transmission input torque tTi to be reached when the motor/generator 5 delivers a maximum torque Tmmax.

$$tTc1 < Tmmax - tTi\,(4)$$

As described previously, in the mode 2301b, a drive force within a range that can be distributed by the second clutch 7 is generated in the EV mode and the second clutch 7 is controlled to slip as soon as possible when the drive force exceeds the range that can be distributed by the second clutch 7. Thus, in the mode 2301b, the target second clutch torque transfer capacity tTc2 is held at a value evTmax equivalent to the maximum drive force attainable in the EV mode, as shown in Figure 13.

When the power train is in the mode 2301b, the target engine torque tTe is set to zero as shown in Figure 13 because the engine 1 is not being started yet.

In the mode 2301b, in order to prevent the drive force of the wheels from declining due to the sliding torque (engine cranking torque) of the first clutch 6, the target motor/generator torque tTm is set to the sum of the target transmission input torque tTi required to achieve the transient target drive force tFo and a compensation amount tTc1 that compensates for the sliding torque of the first clutch 6, as shown in the equation (5) below. Figure 13 shows how the target motor/generator torque tTm changes.

$$tTm = tTi - tTe \qquad (5)$$

CONDITIONS FOR MOVING TO NEXT MODE 2303

During the control just described, the target motor/generator tTm increases to accommodate the increase in the target transmission input torque tTi resulting from the increase in the accelerator position APO. The second clutch 7 starts to slip when the torque inputted to the second clutch 7 from the motor/generator 5 exceeds the EV second clutch maximum torque transfer capacity evTmax, which is maintained at a value equivalent to the maximum drive force attainable in EV mode.

At the moment t2 (Figure 13) when the second clutch 7 starts to slip (when the relationship Nm > Ni starts to exist), the mode moves from the mode 2301b to the mode 2303.

As the second clutch 7 starts slipping, the torque transmitted by the second clutch 7 changes gradually in either a continuous or a stepwise manner from the torque imparted by the motor/generator 5 to the torque transfer capacity Tc2 of the second clutch 7. Consequently, there are no sudden changes in the drive force and the drive force maintains a smooth, continuous trend.

In order to cause the second clutch 7 to slip while maintaining the sliding torque of the first clutch 6, the torque transfer capacity Tc2 of the second clutch 7 must be lowered into the range of drive forces that can be delivered in EV mode. Since the second clutch torque transfer capacity Tc2 is already held at a value equivalent to the maximum drive force that can be delivered in EV mode, no additional time is required to lower the hydraulic pressure used to connect the second clutch 7 to such a level that the second clutch torque transfer capacity Tc2 enters the range of drive forces that can be delivered in EV mode. As a result, the response with which the drive force is increased as a result of starting the engine is improved.

After the transition to the mode 2303 (after the moment t2), the individual components of the power train are controlled as described below in order to reduce the shock caused by drive torque fluctuation during the connection of the first clutch 6. This control starts the engine with the sliding torque of the first clutch 6 while allowing the second clutch 7 to slip.

While the second clutch 7 is slipping, the output torque of the second clutch 7 is equal to the second clutch torque transfer capacity regardless of any torque fluctuation that occurs at the input side of the second clutch 7.

In the mode 2303, the target second clutch torque transfer capacity tTc2 is determined using the equation (6) below.

$$tTc2 = tTi \quad (6)$$

The target second clutch torque transfer capacity tTc2 is increased in accordance with the increase in the transient target drive force tFo0 (target transmission input torque tTi), as shown in Figure 13.

In the mode 2303, the target torque transfer capacity tTc1 of the first clutch 6 is controlled to a value within the range expressed by the equation (7) below in order to keep increasing the drive force and maintain a stable slipping state of the second clutch 7.

$$Tc1min < tTc1 < Tmmax - tTc2 = Tmmax - tTi(7)$$

The value Tc1min is set to the engine friction value before engine ignition occurs and to zero after engine ignition occurs.

In the mode 2303, the engine 1 is being cranked and, therefore, the engine 1 is controlled so as to start. Also in the mode 2303, the motor/generator 5 is controlled to, for example, a target motor/generator rotational speed tNm for achieving a target slip amount dNc2 of the second clutch 7. The target motor/generator rotational speed tNm is calculated with the following equation (8).

$$tNm = Ni + dNc2 \quad (8)$$

The rotational speed Nm of the motor/generator 5 is controlled to the target value tNm with a PI controller (proportional-integral controller).

By using PI control, the motor/generator torque tTm can be changed in accordance with the changes in clutch torque that occur during connection of the first clutch as shown in Figure 13 and the rotational speed of the motor/ generator 5 can be controlled in a stable manner. However, with a PI controller alone, after rotational speed fluctuation occurs due to the sliding torque load of the first clutch 6, the motor/generator torque tTm is changed so as to suppress the rotational speed fluctuation. Since the rotational speed fluctuation (torque fluctuation) of the first clutch 6 is compensated for by controlling the motor/generator torque tTm, the rotational speed of the motor/generator 5 temporarily falls by a large amount. Consequently, it is necessary to secure a comparatively large amount of slippage of the second clutch 7.

Therefore, it is a good idea for the target motor/generator torque tTm to include a component that is contrived to compensate for the torque fluctuation of the first clutch 6 in a feed-forward manner based on the target first clutch torque transfer capacity tTc1.

When such a feed-forward compensation is employed, the torque fluctuation of the first clutch 6 can be alleviated early by the motor/generator 5. As a result, the decrease in the rotational speed of the motor/generator can be prevented from becoming large and the slip amount of the second clutch 7 can be reduced so as to suppress the generation of heat therein.

The same objective can be achieved by using a disturbance observer based on the rotational inertia system of the motor/generator 5 instead of adding a feed-forward control as described above. If any torque other than the motor/ generator torque acts on the motor/generator 5, that torque is considered to be a disturbance and a disturbance estimation is executed. The motor/generator torque is revised using the disturbance estimation value so as to offset (cancel out) the disturbance.

Another method of maintaining the slippage of the second clutch 7 without using rotational speed control is to execute an open control of the motor/generator 5 such that, as indicated in the equation (9) below, the target motor/ generator torque tTm is larger than the sum of the torque amount corresponding to the drive force (the torque transfer capacity tTc2 of the second clutch 7) and the sliding torque compensation amount tTc1 of the first clutch 6.

$$tTm > tTc2 - tTc1 \quad (9)$$

CONDITIONS FOR MOVING TO NEXT MODE 2304

At the moment t3 (Figure 13) when the engine speed Ne reaches or exceeds the rotational speed Nm of the motor/generator 5, the mode changes from the mode 2303 to the mode 2304 in order to suppress overshooting of the engine rotational speed Ne.

Since the control just described functions to maintain stable slippage of the second clutch 7 even when the connection of the first clutch 6 is completed, sudden changes in the amount of torque transmitted by the first clutch 6 resulting from a reversal between the side of the first clutch 6 that is rotating faster and the side that is rotating slower or from completion of the connection of the first clutch 6 can be prevented from being transmitted to the automatic transmission 3. As a result, the engine 1 can be started without the occurrence of torque shock and heating of the second clutch 7 can be suppressed.

In the mode 2304, the individual components of the power train are controlled as explained below in order to suppress overshooting of the engine speed Ne. Also in the mode 2304, the transmission input torque Ti is the same as the second clutch torque transfer capacity tTc2 because the second clutch 7 is still slipping.

Therefore, in the mode 2304, the target second clutch torque transfer capacity tTc2 is determined as expressed in the aforementioned equation (6) and, thus, is set in accordance with the transient target drive force tFo as shown in Figure 13.

In the mode 2304, since the connection of the first clutch 6 has been completed as described previously, the target first clutch torque transfer capacity tTc1 is set to the maximum torque transfer capacity as shown in Figure 13. Also in the mode 2304, the target engine torque tTe is set to a target engine torque in accordance with the HEV mode because the connection of the first clutch 6 is finished and the engine has been started.

Similarly to the mode 2303, in the mode 2304 the motor/generator 5 is controlled so as to achieve, for example, a target second clutch slip amount dNc2. This can be accomplished by finding a target motor/generator rotational speed tNm using the previous equation (8) and controlling the rotational speed of the motor/generator 5 such that the motor/generator rotational speed Nm becomes equal to the target value tNm, or by executing an open control of the motor/generator 5 such that, as indicated in the previous equation (9), the target motor/generator torque tTm is larger than the sum of the torque amount corresponding to the drive force (the torque transfer capacity tTc2 of the second clutch 7) and the sliding torque compensation amount tTc1 of the first clutch 6.

CONDITIONS FOR MOVING TO NEXT MODE 2305

After the moment t3 (shown in Figure 13) when the engine rotational speed Ne reaches or exceeds the motor/generator rotational speed Nm, the engine rotational speed Ne and the motor/generator rotational speed Nm remain substantially the same. At a moment t4 (Figure 13) when the integrated controller 20 determines that the rotational speeds Ne and Nm have been substantially the same for a prescribed amount of time, the controller 20 assumes the first clutch 6 is completely and securely connected and moves from the mode 2304 to the mode 2305.

Since the control just described functions to maintain stable slippage of the second clutch 7 even when the connection of the first clutch 6 is completed, sudden changes in the amount of torque transmitted by the first clutch 6 resulting from a reversal between the side of the first clutch 6 that is rotating faster and the side that is rotating slower or from completion of the connection of the first clutch 6 can be prevented from being transmitted to the drive wheels 2. As a result, the engine 1 can be started without the occurrence of torque shock and heating of the second clutch 7 can be suppressed.

In the mode 2305, the torque inputted to the second clutch 7 from the engine 1 and motor/generator 5 and the torque transfer capacity of the second clutch 7 are controlled so as to become equal to each other in order to suppress the shock associated with reconnecting the second clutch 7. More specifically, the individual components of the power train are controlled as described below. Also in the mode 2305, the transmission input torque Ti and the second clutch torque transfer capacity tTc2 have the same value because the second clutch 7 is still slipping.

Therefore, in the mode 2305, the target second clutch torque transfer capacity tTc2 is determined as expressed in the aforementioned equation (6) and, thus, is set in accordance with the transient target drive force tFo as shown in Figure 13.

In the mode 2305, since the connection of the first clutch 6 has been completed as described previously, the target first clutch torque transfer capacity tTc1 is set to the maximum torque transfer capacity as shown in Figure 13. Also in the mode 2305, the target engine torque tTe is set to a target engine torque in accordance with the HEV mode because the connection of the first clutch 6 is finished and the engine has been started.

In the mode 2305, the motor/generator 5 is controlled such that the second clutch 7 reaches the target slip amount dNc2 in a stable manner in order to prepare for a smooth connection of the second clutch 7 during the subsequent modes 2306 and 2307. In order to accomplish this control, a target motor/generator rotational speed tNm is calculated using the previous equation (8) and the rotational speed of the motor/generator 5 is controlled such that the motor/generator rotational speed Nm becomes equal to the target value tNm.

CONDITIONS FOR MOVING TO NEXT MODE 2306

After the moment t4 (Figure 13) when the integrated controller 20 determines that the engine speed Ne and the motor/generator rotational speed Nm have been substantially the same for a prescribed amount of time (i.e., determines that the first clutch 6 is completely connected), the integrated controller executes the mode 2305 until a moment t5 (Figure 13) when it determines that the motor/generator rotational speed Nm has been in the vicinity of the target motor/generator rotational speed tNm for a prescribed period of time. The determination made at the moment t5 indicates that rotational speed overshooting and torque fluctuations are being suppressed such that the second clutch 7 is slipping at a steady speed and the torque imparted to the second clutch 7 from the engine 1 and the motor/generator 5 is substantially the same as the second clutch torque transfer capacity Tc2. At the moment t5, the integrated controller 20 changes the mode from the mode 2305 to the mode 2306.

The reason a prescribed amount of slippage of the second clutch 7 is targeted instead of targeting zero slippage from the start is to prevent undershooting of the rotational speed of the motor/generator 5. Undershooting of the rotational speed of the motor/generator 5 can cause the slip direction of the second clutch 7 to reverse, resulting in the occurrence of a drive force fluctuation.

The mode 2306 is contrived to maintain a state in which the torque imparted to the second clutch 7 from the engine 1 and the motor/generator 5 is substantially the same as the torque transfer capacity Tc2 of the second clutch 7 while preventing the occurrence of a drive force fluctuation resulting from overshooting the rotational speed Nm of the motor/generator 5 and causing the slip direction of the second clutch 7 to reverse. Therefore, the individual components of the power train are controlled as described below.

In the mode 2306, the transmission input torque Ti and the second clutch torque transfer capacity tTc2 have the same value because the second clutch 7 is still slipping. Therefore, in the mode 2306, the target second clutch torque transfer capacity tTc2 is determined as expressed in the aforementioned equation (6) and, thus, is set in accordance with the transient target drive force tFo as shown in Figure 13.

In the mode 2306, since the connection of the first clutch 6 has been completed as described previously, the target first clutch torque transfer capacity tTc1 is set to the maximum torque transfer capacity as shown in Figure 13. Also in the mode 2306, the target engine torque tTe is set to a target engine torque in accordance with the HEV mode because the connection of the first clutch 6 is finished and the engine has been started.

In the mode 2306, the motor/generator 5 is controlled in such a manner that the rate of change of the target second clutch slip amount dNc2 becomes smaller as the target second clutch slip amount dNc2 decreases. In order to accomplish this control, the target second clutch slip amount dNc2 is gradually decreased to zero while a target motor/generator rotational speed tNm is calculated using the previous equation (8) and the rotational speed of the motor/generator 5 is controlled such that the motor/generator rotational speed Nm becomes equal to the target value tNm.

CONDITIONS FOR MOVING TO NEXT MODE 2307

After the moment t5 (Figure 13), a moment t6 is reached when the target second clutch slip amount dNc2 has remained in the vicinity of zero for a prescribed amount of time. At the moment t6, the integrated controller 20 changes to the mode 2307 in order to reconnect the second clutch 7.

By reconnecting the second clutch 7 when the target second clutch slip amount dNc2 is close to zero, the second clutch 7 is reconnected under conditions where the torque imparted to the second clutch 7 from the engine 1 and the motor/generator 5 is substantially equal to the second clutch torque transfer capacity tTc2. Consequently, a large torque fluctuation does not occur when the second clutch is reconnected, i.e., when the torque transferred by the second clutch 7 changes over from the torque transfer capacity Tc2 to the combined torque delivered by the engine 1 and the motor/generator 5.

The mode 2307 is contrived to reconnect the second clutch 7 while maintaining a state in which the torque imparted to the second clutch 7 from the engine 1 and the motor/generator 5 is substantially the same as the torque transfer capacity Tc2 of the second clutch 7. Therefore, the individual components of the power train are controlled as described below.

Due to the effects of disturbance torque and the precision of the rotational speed sensor, it can take some time for the rotational speed control of the motor/generator 5 to bring the rotational speed difference across the second clutch 7 completely to zero.

Therefore, in the mode 2307, when the slip amount of the second clutch 7 becomes somewhat close to zero, the target torque transfer capacity tTc2 of the second clutch 7 is gradually increased using an open control in such a manner that an allowable drive force fluctuation is not exceeded, as shown in Figure 13. As a result, the second clutch 7 can be reconnected in such a fashion that the slip amount of the second clutch 7 is smoothly and gradually reduced to zero.

In the mode 2307, since the connection of the first clutch 6 has been completed, the target first clutch torque transfer capacity tTc1 is set to the maximum torque transfer capacity as shown in Figure 13.

In the mode 2307, the target engine torque tTe is set to a target engine torque in accordance with the HEV mode because the first clutch 6 is connected and the engine has been started.

As shown in Figure 13, during the mode 2307, the target motor/generator torque tTm is held at the command value issued at the moment t6.

CONDITIONS FOR MOVING TO HEV MODE

At a moment t7 when a prescribed amount of time has elapsed since the moment t6 (see Figure 13), the integrated controller 20 enters the HEV mode and the process of changing from the EV mode to the HEV mode ends.

By controlling the power train as described in the preceding explanation, the second clutch 7 can be reconnected in a smooth manner without the occurrence of shock and the a mode change from the EV mode to the HEV mode that includes starting the engine 1 can be completed.

When rotational speed control of the motor/generator 5 is used to make the torque imparted to the second clutch 7 from the engine 1 and the motor/generator 5 and the second clutch torque transfer capacity Tc2 substantially equal to each other, the discrepancy between the target engine torque tTe and the actual engine torque Te and any disturbance torques are compensated for with the motor generator torque.

Consequently, when the mode 2307 ends at the time t7, a difference $\Delta$Tm (see Figure 13) develops between the target motor/generator torque tTm for HEV mode and the motor/generator torque Tm.

Thus, if the target motor/generator torque tTm is set immediately to a target motor/generator torque in accordance with the HEV mode when the moment t7 for entering the HEV mode reached, the drive force will change based on the motor/generator torque differential $\Delta$Tm and shock will occur. Conversely, if the motor/generator torque differential $\Delta$Tm is allowed to continue, it will inhibited the ability of the vehicle to obtain the desired charge or discharge amount from the motor/generator 5. Therefore, starting from the moment t7 of Figure 13 when the HEV mode is entered, the motor/generator torque differential $\Delta$Tm is gradually reduced to zero so as to prevent the occurrence of sudden changes in drive force and any accompanying occurrences of shock.

A case in which the battery state of charge SOC declines or the vehicle speed rises and the mode change from the EV mode to the HEV mode starts by passing through the mode 2301a will now be explained with reference to Figures 12 and 14. Unlike the previously described mode change, which occurs when the driver has depressed the accelerator, this mode change occurs when it becomes necessary to start the engine while the driver is maintaining a constant driving operation. Therefore, in this case, it is more desirable to execute the mode change (start the engine) smoothly and with a small change in drive force (small shock) than to execute the mode change (start the engine) quickly.

Therefore, the mode change control for a case in which the mode change starts by passing through the mode 2301a, i.e., the mode change control executed when there is a request to change from the EV mode to the HEV mode due a decline in the battery state of charge SOC or an increase in the vehicle speed, is contrived such that the mode moves to the mode 2301a and the mode change starts at the moment t1 (see Figure 14) when the request occurs. In the mode 2301a, the operating (connecting) hydraulic pressure of the second clutch 7 is release as soon as possible. Therefore, the individual components of the power train are controlled as described below.

Since it is more important to start the engine 1 smoothly than to start the engine 1 with a high response speed, the mode 2301a is contrived not to start cranking the engine 1 with sliding torque of the first clutch 6.

In the mode 2301a, the operating hydraulic pressure (connection hydraulic pressure) of the second clutch 7 is lowered in such a fashion that the target second clutch torque transfer capacity tTc2 is lowered to a value slightly larger than the input torque tTi of the automatic transmission 3 as shown in Figure 14. The second clutch 7 is controlled in this manner in order to prevent the connection hydraulic pressure of the second clutch 7 from being reduced too much and causing a drop in the drive force to occur due to slippage of the second clutch 7.

In the mode 2301a, the target engine torque tTe is set to 0 as shown in Figure 14 because the engine is not being started yet. Also in the mode 2301a, the target motor/generator torque tTm is set to a target torque in accordance with EV mode, as indicated in Figure 14, because the engine 1 is not being started yet and the vehicle is still traveling in EV mode.

CONDITIONS FOR MOVING TO NEXT MODE 2302a

The integrated controller 20 moves from the mode 2301a to the mode 2302a (2302a1 or 2302a2) at the moment t2' (Figure 14) when it determines that a prescribed amount of time required for reducing the connection hydraulic pressure of the second clutch 7 has elapsed since the moment t1. More specifically, the integrated controller 20 moves to the mode 2302a1 if the temperature of the clutch hydraulic fluid is equal to or above a prescribed value and to the mode 2302a2 if the temperature of the clutch hydraulic fluid is below the prescribed value.

The mode 2302a1 is selected when the hydraulic fluid temperature is high and the controllability of the clutch hydraulic fluid pressure is good. Therefore, the individual components of the power train are controlled as described below.

In the mode 2302a1, connection control of the second clutch 7 is executed such that the second clutch 7 slips at a second clutch target slip amount dNc2. It is good to use a PI controller as a slip control device.

Since smooth starting of the engine 1 is given priority over fast response, cranking of the engine 1 by means of progressively connecting the first clutch 6 is not started in the mode 2302a1, as shown in Figure 14.

In the mode 2302a1, the target engine torque tTe is set to zero as shown in Figure 14 because the engine 1 is not being started yet.

In the mode 2302al, the target motor/generator torque tTm is set to a value in accordance with the EV mode because the vehicle is still traveling in the EV mode.

Meanwhile, the mode 2302a2 is selected when the hydraulic fluid temperature is low and the controllability of the clutch hydraulic fluid pressure is poor. Since it is difficult to control the second clutch 7 such that it slips in a stable manner when the hydraulic fluid temperature is low, the individual components of the power train are controlled as described below using an open control method (which is different from the control used when the hydraulic fluid temperature is high).

In the mode 2302a2, the target second clutch torque transfer capacity tTc2 is lowered gradually at a prescribed rate of change using an open control.

Since it is more important to start the engine 1 smoothly than to start the engine 1 with a high response speed, the mode 2302a2 is contrived not to start cranking the engine 1 with sliding torque of the first clutch 6.

In the mode 2302a2, the target engine torque tTe is set to zero (0) as shown in Figure 14 because the engine 1 is not being started yet.

In the mode 2302a2, the target motor/generator torque tTm is set to a target motor/generator torque in accordance with the EV mode because the engine 1 has not been started yet and the vehicle is still traveling in the EV mode.

CONDITIONS FOR MOVING TO NEXT MODE 2303

If the integrated controller 20 has been operating in the mode 2301a1 since the moment t2' (Figure 14), then it moves from the mode 2302a (2302a1) to the mode 2303 at a moment t2 when the second clutch 7 starts to slip. Meanwhile, if the integrated controller 20 has been operating in the mode 2301a2 since the moment t2', then it moves from the mode 2302a (2302a2) to the mode 2303 at a moment t2 when it determines that a prescribed amount of time has elapsed since the second clutch 7 started slipping, the prescribed amount of time being an amount of time required for the slippage to stabilize.

With this control, the second clutch torque transfer capacity Tc2 is controlled to be equal to the torque transmitted by the second clutch 7 when it was still connected (not slipping) and the slippage of the second clutch 7 is held at a fixed amount in a stable manner. Since the transmission input torque Ti is substantially the same both before and after the second clutch 7 starts slipping, fluctuation of the drive force can be suppressed and any resulting shock can be alleviated. The reason for this will now be explained.

If the second clutch 7 is assumed to be connected and the transmission input rotational speed Ni is assumed to be accelerating at a rate of acceleration dN, the motion of the motor/generator 5 can be expressed with the rotational motion equation shown below.

$$Jm \times dN = Tm - Tc2 \qquad (10)$$

In the equation, Jm is the moment of inertia of the motor/generator 5, Tm is the motor/generator torque, and Tc2 is the torque transfer capacity of the second clutch 7. Thus, the second clutch torque transfer capacity tTc2 can be expressed as shown below based on the equation (10).

$$Tc2 = Tm - Jm \times dN \qquad (11)$$

Even when the second clutch 7 is slipping in a constant and stable manner, the acceleration of the motor/ generator 5 is dN, just as it is when the second clutch 7 is connected. Therefore, the rotation motion of the motor/ generator 5 can still be expressed according to the rotational motion equation (10). Likewise, the torque transfer capacity Tc2 of the second clutch 7 can be expressed with the same equation (11) as when the second clutch 7 is connected. As a result, when the second clutch 7 is slipping in a constant and stable manner, the torque transfer capacity of the second clutch can be automatically adjusted to be the same as the torque that was transferred when the second clutch was connected.

After the integrated controller 20 moves from the mode 2302a (mode 2302a1 or 2302a2) to the mode 2302 at the moment t2 (Figure 14), the same control (mode progression) is executed as in a case in which the mode change from the EV mode to the HEV mode starts by passing through the mode 2301b. This similarity is illustrated in Figure 12. When the hydraulic fluid temperature is low and the integrated controller 20 passes through the mode 2302a2 shown in Figure 12, the integrated controller 20 moves from the mode 2302a2 to the mode 2303 when a prescribed amount of time that is required for the slipping of the second clutch 7 to stabilize has elapsed since the second clutch 7 started slipping. As a result, the operational effects that will now be described are obtained.

When the second clutch 7 starts to slip, the torque transfer capacity Tc2 of the second clutch 7 is approximately the same as the transmission input torque Ti. However, since the clutch hydraulic pressure (connection hydraulic pressure) lags behind the target value, target second clutch torque transfer capacity tTc2 is slightly smaller than the transmission input torque Ti at the point in time when the second clutch 7 starts to slip. Furthermore, when the clutch hydraulic pressure stabilizes, the torque transfer capacity Tc2 of the second clutch 7 is slightly smaller than when the second clutch 7 first started to slip and the drive force is smaller, too. Therefore, instead of using the start of slippage of the second clutch 7 alone as the condition for moving to the mode 2303, the integrated controller 20 waits until a prescribed amount of time required for the slippage to stabilize has elapsed since the second clutch 7 started to slip. By controlling the mode progression in this way, a sudden change in drive force accompanying the start of slippage of the second clutch 7 can be avoided even when the temperature of the clutch hydraulic fluid is low and the controllability of the clutch hydraulic pressure is poor. Thus, the control precision under low temperature conditions can be improved.

In a case in which the mode 2032a2 will be passed through, the control is executed in such a fashion that the time period from the moment t1 when the mode 2031a starts to the moment t2 when the mode 2303 starts is shorter when the accelerator position APO is larger. Additionally, the rate at which the target second clutch torque transfer capacity tTc2 is decreased (rate at which the connection hydraulic pressure of the second clutch 7 is decreased) by means of the open control executed during the mode 2032a2 can be increased.

With a hybrid vehicle engine start control device in accordance with this embodiment, during a switch from the EV mode to the HEV mode, slip control of the second clutch 7 is executed when the engine 1 is started by progressively connecting the first clutch 6. The slip control of the second clutch 7 enables the drive force to be delivered to the wheels 2 in a continuous fashion while also preventing the torque fluctuation associated with starting the engine 1 from being transmitted to the drive wheels 2. As a result, shock resulting from the torque fluctuation associated with starting the engine 1 can be avoided and the driver can be prevented from experiencing the odd feeling of an absence of driving force.

Additionally, the slip control of the second clutch 7 is contrived to have a first control phase comprising the mode 2301b (modes 2301a, 2302a1, and 2302a2) in which the drive force is controlled by controlling the torque (tTm) of the motor/generator 5 and the torque transfer capacity tTc2 of the second clutch 7 is controlled to a value equivalent to the drive force and a second control phase comprising the next mode 2303 in which the drive force of the vehicle is controlled by controlling the torque transfer capacity (tTc2) of the second clutch 7 while a slipping state dNc2 of the second clutch 7 is maintained by controlling the motor/generator 5. Consequently, the drive force of the vehicle is not affected by variation of the relationship between the actual connection hydraulic pressure of the second clutch 7 and a command value of the connection hydraulic pressure of the second clutch 7. As a result, the drive force does not drop and a sudden change in torque does not occur when the second clutch 7 starts slipping. Thus, the engine 1 can be started with little shock and the previously described operational effects can be obtained in a more reliable manner.

Also, since the control is contrived such that the engine 1 is started after the second control phase has been entered, the torque fluctuation associated with starting the engine is not involved in the control of the torque transfer capacity of the second clutch 7 during the first control phase. As a result, during the first control phase, the drive force can be controlled in accordance with the EV mode with good precision even though the torque transfer capacity of the second clutch 7 is being controlled to a value equivalent to the drive force.

Preferably, the controller is further configured to control the torque transfer capacity of the second clutch 7, in the first control phase, to a value equivalent to the target drive force by executing a rotational differential servo control of the second clutch 7 that uses feedback control of the difference between the input and output rotational speeds of the clutch 7. Since the torque transfer capacity tTc2 of the second clutch 7 is controlled to a value equivalent to the drive force by using a rotation differential servo control of the second clutch 7 during the first control phase, the torque transfer capacity tTc2 of the second clutch 7 is automatically adjusted to a value equivalent to the drive force and can be controlled to the value equivalent to the drive force with good precision.

The control can be contrived such that in the first control phase the connection hydraulic pressure of the second clutch 7 is decreased from a hydraulic pressure range in which the second clutch 7 does not slip until the second clutch 7 starts to slip and the connection hydraulic pressure at which the second clutch 7 starts to slip is set as a hydraulic pressure value equivalent to the target drive force, and such that the control shifts to the second control phase when the second clutch 7 starts to slip. In such a case, the connection hydraulic pressure of the second clutch 7 can be set in a stable manner to a value that is nearly equivalent to the target drive force even when the controllability of the hydraulic pressure is poor and good performance cannot be obtained from the second clutch rotation differential servo system.

The control can also be contrived such that an actual connection hydraulic pressure of the second clutch 7 that is estimated based on a command value of the connection hydraulic pressure of the second clutch 7 and an estimated response of the actual hydraulic pressure with respect to the command value of the connection hydraulic pressure of the second clutch 7 is used as the connection hydraulic pressure of the second clutch 7 at which the second clutch 7 starts to slip and the first control phase ends. In such a case, the connection hydraulic pressure of the second clutch 7 can be set with a high degree of precision to a value that is nearly equivalent to the target drive force even when the controllability of the hydraulic pressure is poor and good performance cannot be obtained from the second clutch rotation differential servo system.

The control can also be contrived such that, in the second control phase, the connection hydraulic pressure of the second clutch 7 is adjusted (increased or decreased) in accordance with an increase or decrease of the target drive force relative to an initial value of the connection hydraulic pressure of the second clutch 7 using a relationship between the target drive force and the connection hydraulic pressure of the second clutch 7 at the point in time when the first control phase ended as a reference. In such a case, the drive force can be controlled with a high degree of precision without being affected by the torque fluctuation accompanying the starting of the engine 1.

Furthermore, in the first control phase, the control of the torque transfer capacity of the second clutch 7 to a value equivalent to the drive force required by the vehicle is accomplished by executing a rotation differential servo control of the second clutch 7 in the mode 2302a1 when the temperature of the clutch hydraulic fluid is within a prescribed region and by executing a connection hydraulic pressure control whereby the connection hydraulic pressure of the second clutch 7 is gradually lowered from a hydraulic pressure range in which the second clutch 7 does not slip when the temperature of the clutch hydraulic fluid is outside said prescribed region. Consequently, when the connection hydraulic pressure of the second clutch 7 is reduced in order to adjust the torque transfer capacity tTc2 of the second clutch 7 to a value equivalent to the drive force during the first control phase, the hydraulic fluid pressure can be controlled in a manner that is well suited to the controllability of the hydraulic fluid pressure so as to achieve the best control results possible in view of the controllability of the hydraulic fluid pressure.

When the length of the first control phase is controlled so as to become shorter as the accelerator pedal depression amount (accelerator position APO) increases, the power train can accommodate the higher drive force response that is required when the accelerator position APO is larger. When the first control phase is shortened, the precision with which the clutch connection hydraulic pressure is adjusted declines and the drive force deviates farther from the target value. However, since the accelerator position APO is large, the change in the drive force is also large and it is difficult for the driver to feel the deviation of the drive force. Consequently, the driver does not feel any obvious drive force shock due to the aforementioned deviation and the response with which the drive force changes can be improved without increasing the degree of physically perceivable drive force shock.

The first control phase can be omitted in situations where the vehicle changes to the HEV mode due to the accelerator pedal being depressed while the vehicle is traveling in the EV mode. Although omitting the first control phase causes the variation of the drive force to increase, the response with which drive force changes is improved and the drive force response that is required when the vehicle is being accelerator by depressing the accelerator pedal can be realized by giving priority to improving the drive force response over preventing shock caused by drive force variation.

Although in the preceding embodiments the concept of the present invention is applied to cases in which the engine is started in connection with changing from the EV mode to the HEV mode, the present invention can also be applied when the engine is started in connection with a control other than a mode change control. For example, the present invention can be applied to a fuel cut recovery control in which the engine is started in connection with resuming the fuel supply after the vehicle has been in a fuel cut state in which the fuel supply to the engine was stopped. A fuel cut state is one example of a state in which the vehicle is traveling in an EV mode and the concept of the present invention can be readily applied in situations where it is necessary to alleviate shock resulting from torque fluctuation associated with starting the engine during a fuel recovery control (a change from a fuel cut state in which the engine is stopped to a state in which fuel is supplied to the engine and the engine is running). When the present invention is applied to a fuel recover control, the same operational effects can be obtained as when the invention is applied to a mode change control.

General interpretation of terms

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment (s), the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application No. 2005-293248 filed on 6th October 2005, the contents of which are incorporated herein by reference.

**Claims**

1. A drive control apparatus for a hybrid vehicle comprising:

   an engine;
   a motor/generator;
   first clutch means for transferring torque between the engine and the motor/generator;
   second clutch means for transferring torque between the motor/generator and at least one drive wheel of the vehicle; and
   control means for selectively controlling the first and second clutch means so as to switch between an electric drive mode by releasing the first clutch means and engaging the second clutch means, and a hybrid drive mode by engaging both the first and second clutch means;

   wherein the control means is arranged to perform slip control of the second clutch means when the first clutch means is being engaged to start the engine during a mode change from the electric drive mode to the hybrid drive mode thereby to control the torque transferred by the second clutch means and maintain a target drive force for the vehicle and to simultaneously increase a torque of the motor/generator for starting the engine while maintaining a slipping state of the second clutch means until engagement of the first clutch means is completed.

2. An apparatus as claimed in claim 1 wherein the control means is arranged to peform the slip control of the second clutch means by performing a first control phase in which the torque transferred by the second clutch means is controlled to a value equivalent to the target drive force and a second control phase in which controlling the torque transferred by the second clutch means to the target drive force and simultaneously increasing the torque of the motor/generator to an amount corresponding to the torque required to start the engine while maintaining the slipping state of the second clutch means occurs after the first control phase.

3. An apparatus as claimed in claim 2 wherein the control means is arranged to control the target drive force, in the first control phase, by adjusting the torque of the motor/generator while the torque transfer capacity of the second clutch means is controlled to the value equivalent to the target drive force.

4. An apparatus as claimed in claim 2 or claim 3 wherein the control means is arranged to start the engine after entering the second control phase.

5. An apparatus as claimed in any of claims 2 to 4 wherein the control means is arranged to control the torque transferred by the second clutch means, in the first control phase, to a value equivalent to the target drive force by executing a rotational differential servo control of the second clutch means.

6. An apparatus as claimed in any of claims 2 to 5 wherein the control means is arranged to decrease a connection hydraulic pressure of the second clutch means, in the first control phase, from a hydraulic pressure range in which the second clutch means does not slip to a pressure range in which the second clutch means starts to slip, with the connection hydraulic pressure at which the second clutch means starts to slip being set as a hydraulic pressure value equivalent to the target drive force and wherein the control means is arranged to execute the slip control such that the first control phase shifts to the second control phase when the second clutch means starts to slip.

7. An apparatus as claimed in claim 6 wherein the control means is arranged to estimate an actual connection hydraulic pressure of the second clutch means based on a command value of the connection hydraulic pressure of the second clutch means and to use an estimated response of the actual hydraulic pressure with respect to the command value of the connection hydraulic pressure of the second clutch means as the connection hydraulic pressure of the second clutch means at which the second clutch means starts to slip and the first control phase ends.

8. An apparatus as claimed in any of claims 2 to 7 wherein the control means is arranged to adjust the connection hydraulic pressure of the second clutch means in accordance with an increase or decrease of the target drive force relative to an initial value of the connection hydraulic pressure of the second clutch means using a relationship between the target drive force and the connection hydraulic pressure of the second clutch means at the point in time when the first control phase ended as a reference.

9. An apparatus as claimed in any of claims 2 to 8 wherein the control means is arranged to control the torque transfer capacity of the second clutch means, in the first control phase, to a value equivalent to the target drive force by executing a rotation differential servo control of the second clutch means when an oil temperature of the second clutch means is within a prescribed region, and by executing a connection hydraulic pressure control whereby the connection hydraulic pressure of the second clutch means is gradually lowered from a hydraulic pressure range in which the second clutch means does not slip when the oil temperature is below said prescribed region.

10. An apparatus as claimed in any of claims 2 to 9 wherein the control means is arranged to shorten a duration of time of the first control phase as a depression amount of an accelerator pedal increases.

11. An apparatus as claimed in any of claims 2 to 10 wherein the control means is arranged to omit the first control phase when the vehicle shifts to the hybrid traveling mode as a result of the accelerator pedal being depressed while the vehicle is traveling in the electric traveling mode.

12. An apparatus as claimed in any of claims 2 to 11 wherein the control means is arranged to set a target slip amount and to control the rotational speed of the motor/generator, in the second control phase, such that a prescribed slipping rotational speed is maintained.

13. A method of controlling drive in a hybrid vehicle having first clutch means for transferring torque between an engine and a motor/generator and second clutch means for transferring torque between the motor/generator and at least one drive wheel of the vehicle and control means for selectively controlling the first and second clutch means to switch between an electric drive mode by releasing the first clutch means and engaging the second clutch means, and a hybrid drive mode by engaging both the first and second clutch means; the method comprising:

executing a slip control of the second clutch means when the first clutch means is being engaged to start the engine during a mode change from the electric drive mode to the hybrid drive mode thereby to control the torque transferred by the second clutch means to maintain a target drive force for the hybrid vehicle, and by simultaneously increasing a torque of the motor/generator for starting the engine while maintaining a slipping state of the second clutch means until connection of the first clutch means is completed.

**14.** A hybrid vehicle having an apparatus or adapted to use a method as claimed in any preceding claim.

1   1a  6   5   4   3a  3   3b  2

AUTOMATIC
TRANSMISSION

8

2

11  12  13  14  7

ENGINE
SPEED Ne

MOTOR/GENERATOR
ROTATIONAL
SPEED Nm

INPUT
ROTATIONAL
SPEED Ni

OUTPUT
ROTATIONAL
SPEED No

## Fig. 1

1   1a  6   5   4   3a  3   3b  2

AUTOMATIC
TRANSMISSION

8

2

11  12  13  14  7

ENGINE
SPEED Ne

MOTOR/GENERATOR
ROTATIONAL
SPEED Nm

INPUT
ROTATIONAL
SPEED Ni

OUTPUT
ROTATIONAL
SPEED No

## Fig. 2

1   1a  6   5   4   3a  7   3   3b  2

AUTOMATIC
TRANSMISSION

8

2

11  12  13  14

ENGINE
SPEED Ne

MOTOR/GENERATOR
ROTATIONAL
SPEED Nm

INPUT
ROTATIONAL
SPEED Ni

OUTPUT
ROTATIONAL
SPEED No

## Fig. 3

## Fig. 4

## Fig. 5

(CONTROL PROCESSING EXECUTED BY
OPERATING POINT COMMAND SECTION)
START

COMPUTE TRANSIENT TARGET
DRIVE FORCE tFo — S61

COMPUTE TARGET TRANSMISSION
INPUT TORQUE tTi — S62

SELECT TRAVELING MODE — S63

COMPUTE TARGET GEAR SHIFT — S64

COMPUTE TARGET ENGINE TORQUE
tTe — S65

COMPUTE TARGET
MOTOR/GENERATOR TORQUE tTm — S66

COMPUTE TARGET FIRST CLUTCH
TORQUE TRANSFER CAPACITY tTc1 — S67

COMPUTE TARGET SECOND CLUTCH
TORQUE TRANSFER CAPACITY tTc2 — S68

END

# Fig. 6

FINAL TARGET
DRIVE FORCE
(tFo0)

LARGER

APO (ACCELERATOR POSITION)

0

0

VEHICLE SPEED (VSP)

# Fig. 7

ACCELERATOR
POSITION (APO)

A'

HEV MODE REGION

HEV → EV CHANGEOVER LINE

EV → HEV CHANGEOVER LINE

EV MODE REGION

A          C          B          B'

0

0                    VEHICLE SPEED (VSP)

## Fig. 8

DISCHARGE

TARGET
CHARGE/DISCHARGE    0
QUANTITY (tP)

CHARGE

0                    BATTERY STATE OF CHARGE (SOC)

## Fig. 9

Fig. 10

Fig. 11

Fig. 12

Fig. 13

EV → HEV MODE CHANGE
REQUESTED DUE TO DECREASED SOC
OR INCREASED VEHICLE SPEED

PRESCRIBED
AMOUNT OF TIME
ELAPSED SINCE
SECOND CLUTCH
STARTED SLIPPING

FIRST
CLUTCH
CONNECTION
DETECTED

SECOND CLUTCH
SLIP AMOUNT
REACHES 0

FIRST CLUTCH
CONNECTS

RECONNECTION OF SECOND
CLUTCH COMPLETED

ACCELERATOR POSITION
(APO)

TIME

ENGINE ROTATIONAL SPEED (Ne)

MOTOR/GENERATOR ROTATIONAL
SPEED (Nm)

TRANSMISSION INPUT
ROTATIONAL SPEED (Ni)

Nm    dNc2

Ne    Ni

TIME

TARGET ENGINE TORQUE
(tTe)
TARGET MOTOR/GENERATOR
TORQUE (tTm)

tTm    tTe

ΔTm

TIME

FIRST AND SECOND CLUTCHES
TORQUE TRANSFER CAPACITIES
(tTc1, tTc2)

(EV SECOND CLUTCH
MAXIMUM TORQUE
TRANSFER CAPACITY
evTmax)

tTc1

tTc2

TIME

DRIVE FORCE

(DELIVERABLE DRIVE
FORCE IN EV MODE)

Fo
(ACTUAL DRIVE FORCE)

t1   t2'   t2   t3   t4   t5   t6 t7   TIME

EV    2301a   2302a   2303   2304   2305   2306 2307    HEV

# Fig. 14

## REFERENCES CITED IN THE DESCRIPTION

**Patent documents cited in the description**

- JP 11082260 A
- JP 2005293248 A